# FASCICULE DE BREVET EUROPEEN

(11) **EP 0 615 092 B1**
(45) Date de publication et mention de la délivrance du brevet: **14.01.1998**
(21) Numéro de dépôt: 94400526.3
(22) Date de dépôt: 10.03.1994
(51) Int. Cl.: F16L 55/136

(54) **Bouchon obturateur de tuyauteries, notamment de tubes ou d'alésages d'échangeur thermique, dans lesquelles circule un fluide sous pression**
Stopfen, insbesondere für Rohre oder in Bohrungen von Wärmetauschern, in welchen ein unter Druck stehendes Fluid zirkuliert
Plug, specially for tubes or the bore of a heat exchanger, in which pressurized fluid circulates

(30) Priorité: 10.03.1993 FR 9302773
(43) Date de publication de la demande: 14.09.1994
(73) Titulaire: ETABLISSEMENTS TROUVAY & CAUVIN Société Anonyme, F-76600 Le Havre (FR)
(72) Inventeur: Gibon, Bernard, F-76600 Le Havre (Seine Maritime) (FR)
(74) Mandataire: Cabinet HERRBURGER

(56) Documents cités:
- EP-A- 0 069 866
- DE-A- 864 787
- GB-A- 1 054 122
- GB-A- 1 258 369
- US-A- 4 381 800
- US-A- 4 474 216
- US-A- 4 760 868

## Description

L'invention concerne un bouchon obturateur de tuyauteries notamment de tubes ou d'alésages d'échangeur thermique dans lesquelles circule un fluide sous pression.

Un tel bouchon comprend un boulon sur la tige duquel sont enfilés des moyens d'étanchéité et des moyens d'ancrage mécaniques expansibles susceptibles de s'appliquer contre la face interne d'un tuyauterie par serrage d'un écrou en prise sur le filetage du boulon.

Les moyens d'étanchéité comprennent au moins une première bague rigide jouxtant avec une seconde bague rigide, cette première bague rigide étant pourvue d'un épaulement externe à l'une de ses extrémités et d'un épaulement interne à son autre extrémité, ces extrémités épaulées recevant chacune au moins un joint d'étanchéité annulaire déformable élastiquement. la longueur de l'épaulement externe de la première bague rigide étant telle qu'il détermine par coopération avec la seconde bague rigide et après serrage du bouchon obturateur à l'aide de l'écrou, au moins le degré de compression axiale maximum du joint d'étanchéité disposé sur l'épaulement extérieur.

Suivant l'invention de ce bouchon obturateur est caractérisé en ce que les épaulements de la première bague rigide ont une longueur supérieure à la longueur du joint associé et inférieure au double de cette longueur.

Suivant une autre caractéristique de l'invention les moyens d'étanchéité comprennent une première bague rigide épaulée recevant les joints d'étanchéité et deux secondes bagues épaulées dont les épaulements constituent le complémentaire des épaulements de cette première bague.

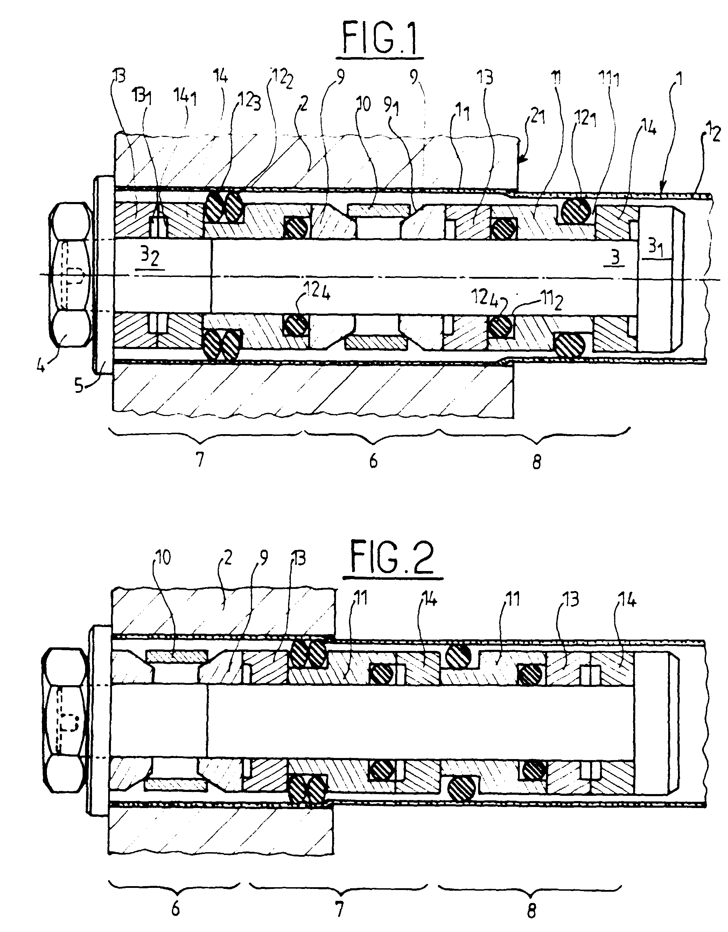

L'invention est représentée à titre d'exemple non limitatif sur les dessins ci-joints. Les figures 1 et 2 de ces dessins représentent, en coupe axiale, deux genres d'empilage des éléments d'un même mode de réalisation d'un bouchon obturateur.

Il est à noter que des bouchons obturateurs de tuyauteries dans lesquels circulent un fluide sous pression du type sus mentionné ont déjà été proposés conformément aux documents US-A-4 381 800 et GB-A-1 054 122, qui est considéré comme l'état de la technique le plus proche.

A partir de cet art antérieur la présente invention a pour but la réalisation d'un bouchon obturateur qui permet d'obturer une tuyauterie sans risque de fuite et de manière fiable et sans que la pression à l'intérieur de la tuyauterie risque de déplacer ou d'éjecter le bouchon en question.

Le dispositif de l'invention a également pour but d'assurer l'obturation de tuyauteries à hauteur des extrémités dudgeonnées expansées dans les trous d'une plaque d'extrémité d'un échangeur thermique multitubulaire et cela quelle que soit l'épaisseur de cette plaque d'extrémité. L'obturation étanche de la tuyauterie peut ainsi particulièrement être assurée de manière efficace même s'il apparaît, comme c'est fréquemment le cas, une fissuration à la jonction de la zone dudgeonnée et de la zone non dudgeonnée de la tuyauterie, c'est-à-dire à hauteur de l'une des faces de la plaque d'extrémité de l'échangeur multitubulaire.

La présente invention a également pour but d'assurer un ancrage mécanique efficace du bouchon obturateur, sans risquer de détériorer les joints d'étanchéité.

Le bouchon obturateur des figures 1 et 2 est représenté à l'état non serré, à l'intérieur d'une tuyauterie 1 d'un échangeur multitubulaire, cette tuyauterie 1 comportant une extrémité dudgeonnée 11 assemblée à la plaque d'extrémité 2 de l'échangeur.

Comme on le remarque, la jonction entre cette extrémité dudgeonnée 1₁ et la partie non dudgeonnée 1₂ de la tuyauterie 1 est située à hauteur de la face 2₁ de la plaque 2, c'est-à-dire à hauteur de la zone où on constate le plus fréquemment la formation de fissures dans la tuyauterie 1 après quelques années de fonctionnement de l'échangeur.

Ce bouchon obturateur comprend un boulon 3 pourvu d'une tête 3₁ et d'une extrémité filetée 3₂ sur laquelle vient se visser l'écrou 4 par l'intermédiaire d'une rondelle 5. Sur la tige de ce boulon, est enfilé l'ensemble des pièces constitutives d'un moyen d'ancrage mécanique 6 et l'ensemble des pièces constitutives de deux moyens d'étanchéité 7 et 8.

Le moyen d'ancrage mécanique 6 comprend deux bagues rigides identiques 9, dont une extrémité présente une paroi externe conique 9₁ et une bague 10, déformable plastiquement, en forme de manchon cylindrique à section circulaire, dont le diamètre est tel qu'il vient, à l'état non serré du bouchon, s'appuyer par ses extrémités à la base des parties coniques 9₁ des bagues 9.

Ainsi, lors de la mise en place du bouchon obturateur par serrage de l'écrou 4, le rapprochement des bagues métalliques rigides 9 entraîne la déformation plastique du manchon 10, de préférence également métallique, jusqu'à ce que son expansion l'amène à s'ancrer fermement dans la paroi du tube 1.

Conformément à l'invention, il a par ailleurs été prévu de réaliser des fentes longitudinales (non représentées) aux deux extrémités du manchon 10, de façon à favoriser la déformation et donc l'expansion du manchon. Ces fentes longitudinales d'une des extrémités du manchon sont décalées des fentes de l'autre extrémité, éventuellement en s'interpénétrant les unes les autres, de manière à ce que les ancrages des deux extrémités du manchon dans le tube soient également décalés et de façon également à éviter que la rupture du manchon, lorsque le serrage de l'écrou 4 expanse le manchon au-delà de sa limite de déformation plastique, se produise parallèlement à l'axe du manchon.

La face externe du manchon 10 est par ailleurs pourvue d'aspérités de surface, telles qu'un rainurage annulaire, pour favoriser l'ancrage mécanique.

Les moyens d'étanchéité 7 et 8 comprennent chacun une première bague rigide 11, en général métallique, qui est pourvue, à l'une de ses extrémité, d'un épaulement externe 11₁ destiné à recevoir au moins un joint torique 12₁, 12₂, 12₃ dont le diamètre est déterminé pour qu'il vienne s'appliquer contre la face interne du tuyau 1 considéré.

Le moyen d'étanchéité du bouchon obturateur conforme à l'invention présente par ailleurs plusieurs dispositions particulières, qui ont pour but d'assurer une étanchéité convenable pour des gammes relativement larges de diamètres de tuyauteries, malgré les diamètres différents de ces tuyauteries à hauteur des zones dudgeonnées et à hauteur des zones non dudgeonnées et cela quelle que soit l'épaisseur de la plaque d'extrémité de l'échangeur multitubulaire et quel que soit également le motif de l'obturation désirée et, particulièrement, quelle que soit la position de la fissuration de la tuyauterie considérée.

Ainsi, la bague épaulée 11 est pourvue d'un épaulement externe 11₁, à l'une de ses extrémités et d'un épaulement interne 11₂ à son autre extrémité, cet épaulement 11₂ étant destiné à recevoir également un joint déformable élastiquement 12₄ de manière à assurer l'étanchéité entre la bague 11 et la tige du boulon 3.

La longueur de ces épaulements 11₁, et 11₂ est par ailleurs supérieure à la longueur du joint 12₁, 12₄ mis en oeuvre, de façon que même après serrage efficace du bouchon, ces joints 12₁ et 12₄ n'assurent l'étanchéité du bouchon, principalement ou exclusivement que par déformation radiale.

La longueur de ces épaulements 11₁ et 11₂ est également inférieure au double de la longueur des joints d'étanchéité, de façon que en fonction du diamètre du tuyau à obturer ou en fonction de la nature du matériau élastique qui constitue les joints il soit possible de disposer, principalement dans l'épaulement externe 11₁ deux joints juxtaposés 12₂, 12₃ qui, lors du serrage du bouchon, sont alors comprimés axialement, suivant un degré de compression déterminé et limité, pour venir s'appliquer avec une pression élastique suffisante contre la paroi dudgeonnée du tube 1.

Suivant la structure de l'échangeur (diamètre des tuyauteries 1, forme et dimensions des joints 12₁, 12₂, 12₃, 12₄, température, nature et pression du fluide transporté par les tuyauteries 1, etc.) il est également prévu de permettre à l'opérateur de doser dans chaque cas le degré de compression des joints.

A cet effet, la bague rigide épaulée 11 recevant les joints d'étanchéité, est juxtaposée avec au moins une bague rigide 13, 14 qui est pourvue à au moins l'une de ses extrémités, d'un épaulement 13₁, 14₁ qui constitue le complément des épaulements 11₁, 11₂ de la bague 11. Ainsi, l'opérateur a la possibilité de renverser cette bague afin qu'elle s'interpénètre sur ou dans les épaulements 11₁, 11₂ de la bague 11 pour assurer un positionnement et une compression du joint de cette bague en fonction de la structure du joint mis en oeuvre, de la structure de la chaudière, des caractéristiques du fluide transporté par les tuyauteries etc.

Suivant l'exemple représenté sur la figure 1, les deux bagues rigides 13, 14 comportent toutes les deux un même épaulement interne d'extrémité 13₁, 14₁, le renversement de l'une de ces bagues permettant donc de compresser axialement le ou les joints 12₁, 12₂, 12₃ disposés dans les épaulements complémentaires externes 11₁ des bagues 11.

Dans cet exemple, on considère donc que pour ce type de bouchon il est utile uniquement de comprimer axialement et éventuellement les joints extérieurs de la bague 11, cette compression étant dans tous les cas limitée par la différence de longueur des parties épaulées complémentaires en diamètre. La longueur de l'épaulement 13₁, 14₁ pourra, par exemple, correspondre à la moitié ou au tiers de la longueur d'un joint 12₂, 12₃.

On note également que les moyens d'étanchéité 7 et 8 comprennent chacun une bague épaulée Il recevant les joints d'étanchéité et deux bagues épaulées 13, 14 de façon qu'il soit possible de modifier la position axiale des joints d'étanchéité 12₁, 12₂, 12₃ et 12₄ en fonction notamment de l'épaisseur de la plaque 2, c'est-à-dire de la longueur de la zone dudgeonnée, en fonction de la position de la fissuration à obturer, etc.

Ainsi, suivant la figure 1, les bagues 13, 14 du moyen d'étanchéité 7 sont enfilées sur le boulon 3 après la bague épaulée 11, alors que pour le moyen d'étanchéité 8 la bague 11 est disposée entre les deux bagues 13, 14.

Par contre, suivant la figure 2, la bague 11 du moyen d'étanchéité 7 est disposée entre les deux bagues 13, 14 alors que la bague épaulée Il du moyen d'étanchéité 8 est enfilée sur le boulon 3 après les deux bagues 13, 14.

Le bouchon obturateur conforme à l'invention permet donc une multiplicité des combinaisons des pièces enfilées, suivant la nature de l'obturation à réaliser.

Egalement, cette multiplicité des combinaisons permet de positionner le moyen d'ancrage 6 de façon qu'il soit situé à hauteur de la plaque d'extrémité 2, quelle que soit son épaisseur.

Ainsi, suivant la figure 1, la plaque 2 est relativement épaisse et le moyen d'ancrage mécanique 6 est disposé entre les deux moyens d'étanchéité 7 et 8 alors que, suivant la figure 2, la plaque 2 est relativement mince et le moyen d'ancrage mécanique 6 est enfilé sur le boulon 3 après les deux moyens d'étanchéité 7 et 8.

Suivant l'exemple représenté, le dispositif obturateur comprend un moyen d'ancrage mécanique 6 et deux moyens d'étanchéité 7 et 8 de façon à pouvoir obtenir une double étanchéité, par exemple à hauteur de la partie dudgeonnée et à hauteur de la partie non dudgeonnée et cela quelle que soit l'épaisseur de la plaque d'extrémité 2. On comprendra cependant que, si cela est jugé suffisant, le bouchon obturateur pourra comporter uniquement un moyen d'ancrage mécanique et un moyen d'étanchéité, sans sortir du cadre de l'invention.

## Revendications

1. Bouchon obturateur de tuyauteries, notamment de tubes ou d'alésages d'échangeur thermique, dans lesquelles circule un fluide sous pression, ce bouchon comprenant un boulon (3) sur la tige duquel sont enfilés des moyens d'étanchéité et des moyens d'ancrage mécaniques expansibles susceptibles de s'appliquer contre la face interne d'une tuyauterie par serrage d'un écrou (4) en prise sur le filetage du boulon, bouchon dans lequel les moyens d'étanchéité (7, 8) comprennent au moins une première bague rigide (11) jouxtant avec une seconde bague rigide (13, 14), cette première bague rigide (11) étant pourvue d'un épaulement externe (11₁) à l'une de ses extrémités et d'un épaulement interne (11₂) à son autre extrémité, ces extrémités épaulées recevant chacune au moins un joint d'étanchéité annulaire déformable élastiquement (12₁, 12₂, 12₃, 12₄), la longueur de l'épaulement externe (11₁) de la première bague rigide étant telle qu'il détermine par coopération avec la seconde bague rigide et après serrage du bouchon obturateur à l'aide de l'écrou, au moins le degré de compression axiale maximum du joint d'étanchéité (12₁, 12₂, 12₃) disposé sur l'épaulement extérieur (11₁), bouchon caractérisé en ce que
les épaulements (11₁ et 11₂) de la première bague rigide (11) ont une longueur supérieure à la longueur du joint associé et inférieure au double de cette longueur.

2. Bouchon conforme à la revendication 1,
caractérisé en ce que
les moyens d'étanchéité (7, 8) comprennent une première bague rigide épaulée (11) recevant les joints d'étanchéité (12₁, 12₂, 12₃, 12₄) et deux secondes bagues épaulées (13, 14) dont les épaulements (13₁, 14₁) constituent le complémentaire des épaulements de cette première bague.

3. Bouchon conforme à l'une quelconque des revendications précédentes,
caractérisé en ce que
les moyens d'ancrage mécanique expansibles (6) comprennent deux bagues rigides (9) extérieurement au moins partiellement coniques, entre lesquelles est disposée une bague monobloc déformable.

4. Bouchon conforme à la revendication 3,
caractérisé en ce que
la bague déformable (10) est pourvue de fentes longitudinales à ses deux extrémités, ces extrémités fendues de la bague venant en appui sur les extrémités coniques (9₁) des deux bagues coniques (9).

5. Bouchon conforme à la revendication 4,
caractérisé en ce que
les fentes longitudinales de l'une des extrémités de la bague (10) déformable sont décalées des fentes de l'autre extrémité.

6. Bouchon conforme à l'une quelconque des revendications précédentes,
caractérisé en ce que
le boulon (3) est d'une longueur telle qu'il reçoit par enfilement deux moyens d'étanchéité (7, 8) et un moyen d'ancrage mécanique (6).

## Patentansprüche

1. Verschlußstopfen für Rohrleitungen, insbesondere für Rohre oder Bohrungen von Wärmeaustauschern, in denen ein Fluid unter Druck zirkuliert, wobei dieser Stopfen einen Bolzen (3) enthält, auf dessen Schaft Dichtungsmittel aufgereiht sind und dehnbare Mittel zur mechanischen Verankerung, die in der Lage sind, sich durch Anziehen einer Mutter (4) an die Innenfläche einer Rohrleitung anzulegen, die in das Gewinde des Bolzens eingreift, Stopfen, bei dem die Dichtungsmittel (7, 8) mindestens einen ersten starren Ring (11) umfassen, der neben einem zweiten starren Ring (13, 14) liegt, wobei der erste starre Ring (11) an einem seiner Enden mit einem äußeren Absatz (11₁) versehen ist und an seinem anderen Ende mit einem inneren Absatz (11₂), wobei diese mit Absätzen versehen Enden jeweils mindestens einen elastisch verformbaren Dichtungsring (12₁, 12₂, 12₃, 12₄) aufnehmen, wobei die Länge des äußeren Absatzes (11₁) des ersten starren Ringes derart bemessen ist, daß sie durch Zusammenwirken mit dem zweiten starren Ring und nach Festziehen des Verschlußstopfens mit Hilfe der Mutter mindestens die maximale axiale Kompression der Dichtung (12₁, 12₂, 12₃) festlegt, die auf dem äußeren Absatz (11₁) angeordnet ist, Stopfen, dadurch gekennzeichnet, daß
die Absätze (11₁ und 11₂) des ersten starren Ringes (11) eine Länge haben, die größer ist, als die Länge der zugehörigen Dichtung und kleiner, als das Doppelte dieser Länge.

2. Stopfen nach Patentanspruch 1,
dadurch gekennzeichnet, daß
die Dichtungsmittel (7, 8) einen ersten mit Absatz versehenen starren Ring (11) umfassen, der die Dichtungen (12₁, 12₂, 12₃, 12₄) aufnimmt und zwei zweite mit Absatz versehene Ringe (13, 14), deren Absätze (13₁, 14₁) die Ergänzung der Absätze dieses ersten Ringes darstellen.

3. Stopfen nach irgendeinem der vorangehenden Patentansprüche,
dadurch gekennzeichnet, daß
die verformbaren Mittel zur mechanischen Verankerung (6) zwei starre Ringe (9) umfassen, die außen mindestens teilweise konisch sind und zwischen denen ein verformbarer Ring aus einem Stück angeordnet ist.

4. Stopfen nach Patentanspruch 3,
dadurch gekennzeichnet, daß
der verformbare Ring (10) an seinen beiden Enden mit Schlitzen in Längsrichtung versehen ist, wobei diese geschlitzten Enden des Ringes sich an die konischen Enden (9₁) der beiden konischen Ringe (9) anlegen.

5. Stopfen nach Patentanspruch 4,
dadurch gekennzeichnet, daß
die Schlitze in Längsrichtung eines der Enden des verformbaren Ringes (10) relativ zu den Schlitzen des anderen Endes versetzt sind.

6. Stopfen nach irgendeinem der vorangehenden Patentansprüche,
dadurch gekennzeichnet, daß
der Bolzen (3) eine derartige Länge aufweist, daß er durch Aufreihen zwei Dichtungsmittel (7, 8) und ein Mittel zur mechanischen Verankerung (6) aufnimmt.

## Claims

1. Blocking plug for ducts, in particular the tubes of a heat exchanger, in which a fluid circulates under pressure, this plug comprising a bolt (3) on the shaft of which sealing means are attached, and expandable mechanical anchoring means which are capable of pressing against the inside surface of a duct, by clamping a nut (4) gripping on the threading of the bolt, in which plug there are located the sealing means (7,8), comprising at least one first rigid ring (11) contiguous with a second rigid ring (13,14), this first rigid ring (11) being provided with an outer shoulder (11₁) at one of its ends and with an inner shoulder (11₂) at its other end, these ends with shoulders each receiving at least one resiliently deformable annular sealing joint (12₁, 12₂, 12₃, 12₄), the length of the outer shoulder (11₁) of the first rigid ring being such that it defines, by cooperation with the second rigid ring and after clamping the blocking plug with the aid of the nut, at least the maximum degree of axial compression of the sealing joint (12₁, 12₂, 12₃) arranged on the outer shoulder (11₁), which plug is characterised in that the shoulders (11₁ and 11₂) of the first rigid ring (11) have a length which is greater than the length of the associated joint and less than twice the length thereof.

2. Plug according to Claim 1, characterised in that the sealing means (7,8) comprise a first rigid ring with a shoulder (11), accommodating the sealing joints (12₁, 12₂, 12₃, 12₄) and two second rings with shoulders (13, 14), of which the shoulders (13₁, 14₁) form the complement to the shoulders of this first ring.

3. Plug according to any one of the preceding Claims, characterised in that the expandable mechanical anchoring means (6) comprising two rigid rings (9) which are at the outside and at least partially conical, between which there is located a deformable one-piece ring.

4. Plug according to Claim 3, characterised in that the deformable ring (10) is provided with longitudinal slits at its two ends, these slit ends of the ring coming to bear on the conical ends (9₁) of the two conical rings (9).

5. Plug according to Claim 4, characterised in that the longitudinal slits or one of the ends of the deformable ring (10) are offset from the slots at their other end.

6. Plug according to any one of the preceding Claims, characterised in that the bolt (3) is of a length such that it receives, by threading, two sealing means (7,8) and a mechanical anchoring means (6).
